# EUROPÄISCHE PATENTSCHRIFT

(11) **EP 0 666 576 B1**
(45) Veröffentlichungstag und Bekanntmachung des Hinweises auf die Patenterteilung: **13.10.1999**
(21) Anmeldenummer: 95100754.1
(22) Anmeldetag: 20.01.1995
(51) Int. Cl.: H01B 9/00, G02B 6/44

(54) **Energiekabel**
Power cable
Câble d'énergie

(30) Priorität: 03.02.1994 DE 4403266
(43) Veröffentlichungstag der Anmeldung: 09.08.1995
(73) Patentinhaber: ALCATEL, 75008 Paris (FR)
(72) Erfinder: Klass, Joachim, Dipl.-Ing., D-31655 Stadthagen (DE); Stürmer, Michael, Dipl.-Ing., D-32584 Löhne (DE)
(74) Vertreter: Döring, Roger, Dipl.-Ing.

(56) Entgegenhaltungen:
- EP-A- 0 100 694
- EP-A- 0 203 249
- EP-A- 0 347 971
- US-A- 4 787 705

## Beschreibung

Die Erfindung betrifft ein Energiekabel nach dem Oberbegriff des Patentanspruchs 1.

Mittel- und Hochspannungskabel mit zumindest einem mit einer elektrischen Isolierung versehenen Leiter, einem darüber liegenden, aus Schirmdrähten gebildeten einlagigen Schirm sowie einem Außenmantel sind seit langem allgemein bekannt. Neben der Verwendung eines solchen Kabels zur Energieübertragung ist es ebenfalls möglich, in das Kabel Lichtwellenleiter einzulegen, die zur Nachrichtenübermittlung sowie zur Überwachung der in dem Kabel auftretenden Zugkräfte und Temperaturen verwendet werden können.

So ist es bereits aus der EP-B-0 203 249 bekannt, in dem Schirm eines Energiekabels zwischen einzelnen Schirmdrähten von einer Schutzhülle umgebene Lichtwellenleiter-Sensoren anzuordnen, die zur Überwachung der Temperatur und der Zugkräfte im Kabel dienen.

Werden Lichtwellenleiter zu ihrem mechanischen Schutz in Schutzröhrchen aus Kunststoff oder Metall zwischen den Schirmdrähten eines Energiekabels angeordnet, so weisen diese Schutzröhrchen in der Regel einen größeren Außendurchmesser auf als die üblicherweise in dem Schirm eines Energiekabels verwendeten Schirmdrähte. Dadurch besteht insbesondere bei der Herstellung des Kabels, aber auch bei dessen Verlegung, die Gefahr, daß die in radialer Richtung nach außen über die Schirmdrähte hinausragenden Schutzröhrchen durch in radialer Richtung von außen auf das Kabel und damit insbesondere auf die über die Schirmdrähte hinausragenden Schutzröhrchen wirkenden Druckkräfte beschädigt und die Übertragungseigenschaften der Lichtwellenleiter sowie im Fall der Verwendung der Lichtwellenleiter als Sensoren deren Sensoreigenschaften zumindest beeinträchtigt werden.

In der EP-A-0 347 971 ist ein Freileiterseil mit einer optischen Nachrichtenleitung beschrieben, in deren rohrförmiger Hülle Lichtwellenleiter geführt sind. Die Hülle ist von einem metallischen Versteifungsgebilde umgeben, das in radialer Richtung auf das Freileiterseil durch Klemmarmaturen ausgeübte Druckkräfte an der optischen Nachrichtenleitung vorbeileiten soll. Weist die Lichtwellenleiter führende Hülle einen kleineren Durchmesser als die benachbarten Drähte der Verseillage auf, so wird die Hülle zwischen zwei tangential benachbarten Stützelementen angeordnet, die sich in radialer Richtung nach außen bis zur Umfangslinie der Verseillage erstrecken.

Ausgehend von diesem Stand der Technik liegt der Erfindung das Problem zugrunde, die zwischen den Schirmdrähten in der Schirmdrahtlage angeordneten Schutzröhrchen der Lichtwellenleiter bei der Fertigung und der Verlegung des Energiekabels insbesondere vor in radialer Richtung des Kabels wirkenden Druckkräften zu schützen und so eine zuverlässige Funktion der Lichtwellenleiter zu gewährleisten.

Dieses Problem wird gemäß der Erfindung durch die kennzeichnenden Merkmale des Patentanspruches 1 gelöst. Die Erfindung beruht dabei auf der Erkenntnis, daß die in der Schirmdrahtlage zwischen dem zumindest einen Schutzröhrchen und den Schirmdrähten vorgesehenen Abstützelemente, von denen zumindest die dem Schutzröhrchen unmittelbar benachbarten Abstützelemente in radialer Richtung des Energiekabels nach außen eine mindestens so große Erstreckung wie das Schutzröhrchen selbst aufweisen und die in jedem Fall eine größere Erstreckung in dieser Richtung als die Schirmdrähte haben, zu einer gleichmäßigeren Verteilung der von außen auf das Energiekabel wirkenden Druckkräfte führen und so das einen größeren äußeren Durchmesser als die Schirmdrähte aufweisende Schutzröhrchen sowie den darin verlaufenden Lichtwellenleiter vor unzulässig hohen, in radialer Richtung oder in Umfangsrichtung des Kabels wirkenden Druckkräften schützen. Dabei wird das Auftreten von punktuellen Druckstellen an den gegenüber den Schirmdrähten nach außen hervorstehenden Schutzröhrchen wirkungsvoll vermieden. Ein Großteil des Schirms kann weiterhin aus beliebigen dünneren Schirmdrähten gemäß dem vorgesehenen Schirmquerschnitt ausgebildet werden. Die langgestreckten Abstützelemente lassen sich auf einfache Art und Weise gemeinsam mit den Schirmdrähten und dem zumindest einen Schutzröhrchen auf die Kabelseele aufseilen.

Durch die in den Unteransprüchen aufgeführten Maßnahmen sind vorteilhafte Weiterbildungen und Verbesserungen des im Patentanspruch 1 angegebenen Energiekabels möglich.

Zur Verbesserung des Schutzes vor von außen auf das Kabel wirkenden Druckkräften ist es vorteilhaft, wenn zwischen dem zumindest einen Schutzröhrchen und den benachbarten Schirmdrähten jeweils mindestens zwei Abstützelemente angeordnet sind.

Für eine besonders einfache Herstellung und eine wirkungsvolle Abschirmung des erfindungsgemäßen Energiekabels ist es von Vorteil, wenn die Abstützelemente einen kreisförmigen Querschnitt aufweisen und ebenso wie die Schirmdrähte aus Kupfer ausgebildet sind.

Um den in ein Schutzröhrchen eingelegten Lichtwellenleiter vor unzulässig hohen mechanischen Belastungen bei der Fertigung und Verlegung des Energiekabels zu schützen, ist es von Vorteil, wenn das Schutzröhrchen aus Edelstahl ausgebildet ist.

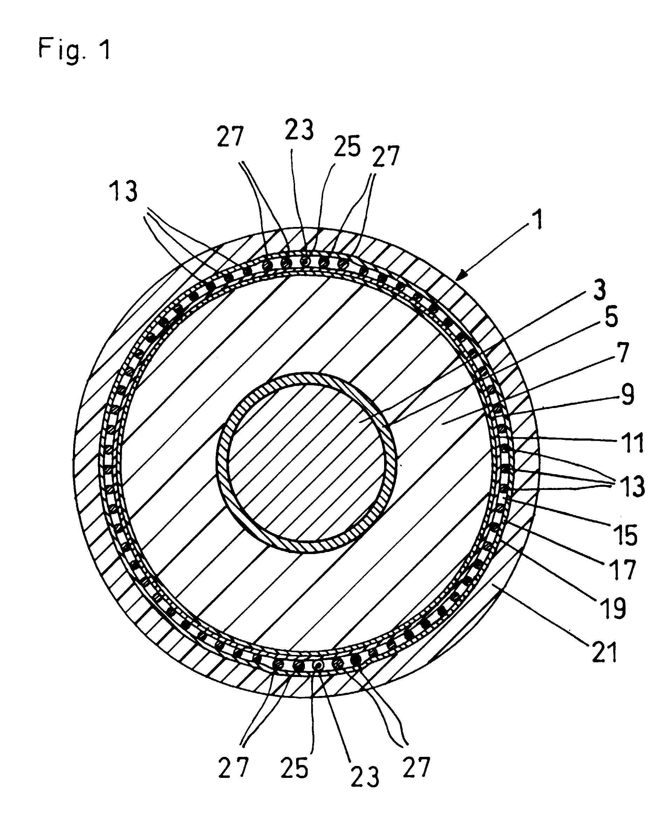

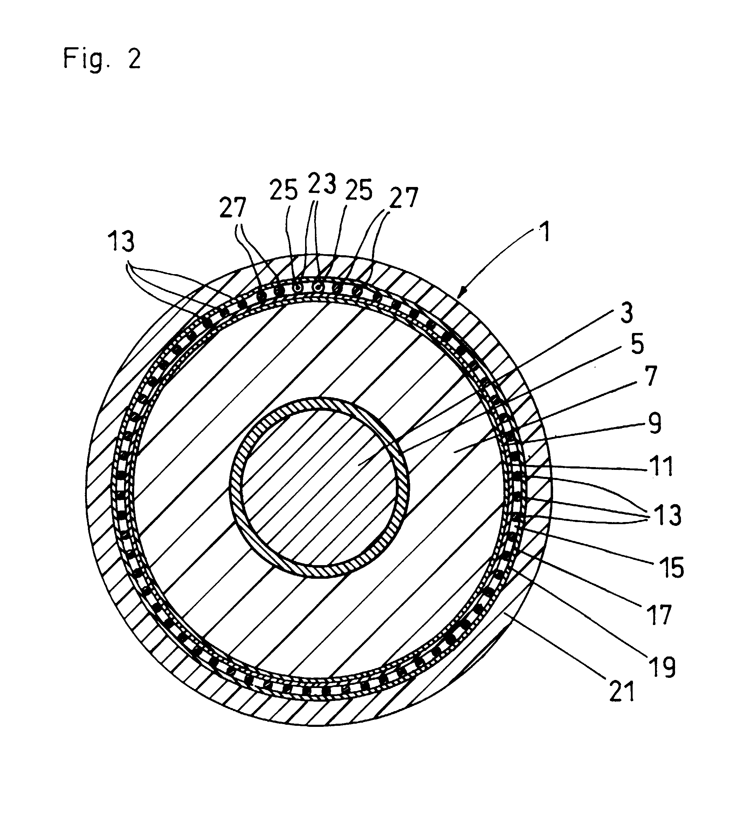

Zwei Ausführungsbeispiele der Erfindung sind in der Zeichnung vereinfacht dargestellt und in der nachfolgenden Beschreibung näher erläutert. So zeigen die Fig. 1 ein erstes erfindungsgemäßes Ausführungsbeispiel sowie die Fig. 2 ein zweites erfindungsgemäßes Ausführungsbeispiel des Energiekabels.

Die in den Fig. 1 und 2 beispielhaft dargestellten Energiekabel 1 weisen einen elektrischen Leiter 3 auf, der von einer inneren Leitschicht 5 umgeben ist. Über dieser inneren Leitschicht 5 ist eine elektrische Isolierung 7 vorgesehen, die ihrerseits von einer äußeren Leitschicht 9 umschlossen ist. An die äußere Leitschicht 9 schließt sich z. B. eine aus einem Rußkreppapier ausgebildete Polsterschicht 11 an. Auf die Polsterschicht 11 sind nebeneinander beispielsweise aus Kupfer ausgebildete, einen kreisförmigen Querschnitt aufweisende Schirmdrähte 13 aufgeseilt, die gemeinsam einen einlagigen Schirm 15 bilden. Über dem Schirm 15 ist eine zweite Polsterschicht 17 sowie eine darüber liegende Diffusionssperre 19 vorgesehen. In radialer Richtung nach außen wird das Energiekabel 1 von einem Außenmantel 21 abgeschlossen.

Bei dem in der Fig. 1 dargestellten ersten erfindungsgemäßen Ausführungsbeispiel ist an zwei einander gegenüber liegenden Stellen des Schirms 15 in Umfangsrichtung des Kabels 1 zwischen den Schirmdrähten 13 beispielsweise jeweils ein Schutzröhrchen 23 angeordnet, das z. B. aus Edelstahl ausgebildet ist, aber auch aus einem Kunststoff bestehen kann. Dabei ist der äußere Durchmesser des Schutzröhrchens 23 mit z. B. etwa 1,2 bis 1,5 mm größer als der Durchmesser der Schirmdrähte 13. In den beiden Schutzröhrchen 23 verläuft mindestens ein, beispielsweise genau ein Lichtwellenleiter 25. Die Lichtwellenleiter 25 dienen z. B. zur kontinuierlichen Temperaturmessung über die Gesamtlänge des Energiekabels 1; sie können aber auch beispielsweise als Drucksensoren oder zur Informationsübertragung verwendet werden. Es ist abweichend von dem Ausführungsbeispiel ebenfalls möglich, in dem Schirm 15 des Kabels 1 eine größere Anzahl von Schutzröhrchen 23 mit darin verlaufenden Lichtwellenleitern 25 vorzusehen und/oder in den Schutzröhrchen 23 jeweils mehrere Lichtwellenleiter 25 anzuordnen.

Auf beiden Seiten der einander gegenüber liegenden Schutzröhrchen 23 ist zwischen dem jeweiligen Schutzröhrchen 23 und den benachbarten Schirmdrähten 13 jeweils mindestens ein langgestrecktes Abstützelement 27 angeordnet, das in radialer Richtung des Energiekabels 1 nach außen über die Schirmdrähte 13 hinausragt. Bei dem in der Fig. 1 dargestellten Ausführungsbeispiel sind z. B. auf jeder Seite des Schutzröhrchens 23 zwei solcher Abstützelemente 27 vorgesehen, die beispielsweise in Form von Kupferdrähten mit einem kreisförmigen Querschnitt ausgebildet sind. Als Abstützelemente können aber ebenfalls Kunststoffstreifen oder beliebige andere Elemente mit rundem, quadratischem oder rechteckigem Querschnitt verwendet werden. Zur besonders wirkungsvollen Entlastung der Schutzröhrchen 23 von mechanischen Beanspruchungen ist die Erstreckung der Abstützelemente 27 in radialer Richtung des Energiekabels 1 nach außen mindestens genauso groß wie die Erstreckung der Schutzröhrchen 23 in dieser Richtung. Bei diesem ersten Ausführungsbeispiel haben z. B. die in Form von Kupferdrähten ausgebildeten Abstützelemente 27 den gleichen Außendurchmesser wie die Schutzröhrchen 23, so daß die Schutzröhrchen 23 nicht über die benachbarten Elemente des Schirmes 15 hinausragen.

Es ist ebenfalls möglich, daß die Abstützelemente 27 nicht alle die gleichen Abmessungen bzw. den gleichen Durchmesser aufweisen, sondern daß ihre Erstreckung in radialer Richtung des Kabels 1 nach außen in Umfangsrichtung gesehen zu den Schirmdrähten 13 hin abnimmt bzw. daß ihre Erstreckung in dieser Richtung zu den Schutzröhrchen 23 hin zunimmt, so daß sich ein gleichmäßiger Übergang zwischen den Schirmdrähten 13 mit kleinerem Durchmesser und den Schutzröhrchen 23 mit größerem Durchmesser ergibt und letztere besonders wirkungsvoll vor unzulässigen mechanischen Beanspruchungen durch von außen wirkende Druckkräfte geschützt sind. Der Großteil des Schirms 15 kann weiterhin mit beliebigen, dünneren Schirmdrähten 13 gemäß dem vorgesehenen Schirmquerschnitt unter Einhaltung gestellter Lückenforderungen versehen werden.

Das in der Fig. 2 dargestellte zweite Ausführungsbeispiel der Erfindung unterscheidet sich von dem in der Fig. 1 dargestellten ersten Ausführungsbeispiel im wesentlichen nur dadurch, daß an einer Stelle des Schirms 15 des Energiekabels 1 zwei nebeneinander liegende Schutzröhrchen 23 mit z. B. jeweils einem Lichtwellenleiter 25 angeordnet sind. Zwischen den dem jeweils anderen Schutzröhrchen 23 abgewandten Seiten der Schutzröhrchen 23 und den benachbarten Schirmdrähten 13 sind jeweils zwei Abstützelemente 27 z. B. in Form von einen kreisförmigen Querschnitt aufweisenden Kupferdrähten angeordnet. Dabei weisen die Abstützelemente 27 in radialer Richtung des Energiekabels 1 nach außen beispielsweise eine größere Erstreckung auf als die Schutzröhrchen 23 in dieser Richtung, so daß die Abstützelemente 27 die Schutzröhrchen 23 in radialer Richtung nach außen überragen.

So werden bei den dargestellten Ausführungsbeispielen der Erfindung die Schutzröhrchen 23 mit den eingelegten Lichtwellenleitern 25 auf einfache und dabei sehr wirkungsvolle Art und Weise vor Beschädigungen durch in radialer Richtung von außen wirkende Druckkräfte geschützt.

## Patentansprüche

1. Energiekabel mit
- zumindest einem mit einer elektrischen Isolierung (7) versehenen Leiter (3),
- einem darüber liegenden, aus Schirmdrähten (13) gebildeten einlagigen Schirm (15),
- zumindest einem im Schirm (15) zwischen den Schirmdrähten (13) in einem Schutzröhrchen (23) verlaufenden Lichtwellenleiter (25), wobei das Schutzröhrchen (23) einen größeren Durchmesser als die Schirmdrähte (13) aufweist, sowie
- einem Außenmantel (21),
dadurch gekennzeichnet, daß
- in der Schirmdrahtlage zwischen dem zumindest einen Schutzröhrchen (23) und den benachbarten Schirmdrähten (13) auf beiden Seiten des Schutzröhrchens (23) jeweils mindestens ein langgestrecktes Abstützelement (27) angeordnet ist,
- die Abstützelemente (27) in radialer Richtung des Energiekabels (1) nach außen eine größere Erstreckung aufweisen als die Schirmdrähte (13), und
- die Erstreckung zumindest der dem Schutzröhrchen (23) unmittelbar benachbarten Abstützelemente (27) in radialer Richtung des Energiekabels (1) nach außen mindestens so groß ist wie die Erstreckung des Schutzröhrchens (23) in dieser Richtung.

2. Energiekabel nach Anspruch 1, dadurch gekennzeichnet, daß die Abstützelemente (27) einen kreisförmigen Querschnitt aufweisen.

3. Energiekabel nach Anspruch 1 oder 2, dadurch gekennzeichnet, daß zwischen dem zumindest einen Schutzröhrchen (23) und den benachbarten Schirmdrähten (13) jeweils mindestens zwei Abstützelemente (27) angeordnet sind.

4. Energiekabel nach einem der Ansprüche 1 bis 3, dadurch gekennzeichnet, daß die Abstützelemente (27) und die Schirmdrähte (13) aus Kupfer ausgebildet sind.

5. Energiekabel nach einem der Ansprüche 1 bis 4, dadurch gekennzeichnet, daß das Schutzröhrchen (23) aus Edelstahl ausgebildet ist.

## Claims

1. Power cable having
- at least one conductor (3) provided with an electrical insulating material (7),
- a single-layer screen (15) constructed from screening wires covering said conductor and said electrical insulating material,
- at least one optical fibre (25) running in a miniature conduit (23) in the screen (15) between the screening wires (13), wherein the miniature conduit tube (23) has a larger diameter than the screening wires (13), as well as
- an outer sheath (21),
characterised in that
- at least one longitudinally extended supporting element (27) is arranged in each case in the screening wire layer between the at least one miniature conduit (23) and the adjacent screening wires,
- the supporting elements (27) have a greater outward extension in the radial direction of the power cable (1) than the screening wires (13), and
- the outward extension in the radial direction of the power cable (1) of at least the supporting elements (27) immediately adjacent to the miniature conduits (23) is at least as great as the extension of the miniature conduit (23) in this direction.

2. Power cable according to Claim 1, characterised in that the supporting elements (27) have a circular cross-section.

3. Power cable according to Claim 1 or 2, characterised in that at least two supporting elements (27) are arranged in each case between the at least one miniature conduit (23) and the adjacent screening wires (13).

4. Power cable according to one of Claims 1 to 3,
characterised in that the supporting elements (27) and the screening wires (13) are constructed from copper.

5. Power cable according to one of Claims 1 to 4,
characterised in that the miniature conduit (23) is constructed from high-grade steel.

## Revendications

1. Câble de puissance comportant
- au moins un conducteur (3) équipé d'une isolation électrique (7),
- surmonté d'un écran monocouche (15) formé de fils de blindage (13),
- au moins un guide d'ondes lumineuses (25) placé dans un tube de protection (23) entre les fils de blindage (13) dans l'écran (15), sachant que le tube de protection (23) présente un diamètre supérieur à celui des fils de blindage (13), ainsi
- qu'un manteau extérieur (21).
Caractérisé par le fait que
- au moins un élément de soutien (27) allongé est disposé dans la couche de blindage entre le ou les tubes de protection (23) et les fils de blindage (13) voisins de chaque côté du tube de protection (23),
- les éléments de soutien (27) présentent dans le sens radial du câble de puissance (1) une plus grande étendue vers l'extérieur que les fils de blindage (13) et que
- l'étendue vers l'extérieur dans le sens radial du câble de puissance (1) au moins des éléments de soutien (27) immédiatement voisins du tube de protection (23) est au moins aussi grande que l'étendue du tube de protection (23) dans ce sens.

2. Câble de puissance selon la revendication 1, caractérisé par le fait que les éléments de soutien (27) présentent une coupe cylindrique.

3. Câble de puissance selon les revendications 1 ou 2, caractérisé par le fait qu'au moins deux éléments de soutien (27) sont disposés entre chacun des tubes de protection (23) et les fils de blindage (13) voisins.

4. Câble de puissance selon une des revendications 1 à 3, caractérisé par le fait que les éléments de soutien (27) et les fils de blindage (13) sont en cuivre.

5. Câble de puissance selon une des revendications 1 à 4, caractérisé par le fait que le tube de protection (23) est en acier inoxydable.
